# EUROPÄISCHE PATENTANMELDUNG

(11) **EP 2 738 030 A2**
(43) Veröffentlichungstag der Anmeldung: **04.06.2014**
(21) Anmeldenummer: 13188208.6
(22) Anmeldetag: 11.10.2013
(51) Int. Cl.: B60K 6/48, B60K 6/547, B60W 10/06, B60W 10/08, B60W 10/111, B60W 20/00, F16H 37/04, F16H 3/095

(54) **Zugkraftunterstütztes Mehrgruppengetriebe und Verfahren zu dessen Betreiben**

(30) Priorität: 29.11.2012 DE 102012221889
(71) Anmelder: ZF Friedrichshafen AG, 88038 Friedrichshafen (DE)
(72) Erfinder: Glueckler, Johannes, 88045 Friedrichshafen (DE)

(57) **Zusammenfassung**

Antriebsstrang eines Kraftfahrzeugs, mit einem einen Verbrennungsmotor (2) und eine elektrische Maschine (EM) aufweisenden Hybridantrieb und einem zwischen den Hybridantrieb und einen Achsantrieb (26) geschalteten, automatisierten Gruppengetriebe (6), wobei das automatisierte Gruppengetriebe (6) zumindest ein in Vorgelegebauweise ausgeführtes Hauptgetriebe (10) mit einer Getriebehauptwelle (22) und mindestens einer Vorgelegewelle (14, 16) sowie zumindest eine dem Hauptgetriebe (10) antriebstechnisch vorgeschaltete, insbesondere als Splitgruppe (8) ausgeführte Vorschaltgruppe aufweist, wobei die elektrische Maschine (EM) des Hybridantriebs mit der oder jeder Vorgelegewelle (14, 16) in Verbindung steht und die Vorschaltgruppe (8) und das Hauptgetriebe (10) mindestens einen gemeinsamen, schaltbaren Direktgang (G6*, G12*) durch diese beiden Getriebeteile zur zugkraftunterstützten Schaltung des Hauptgetriebes (10) aufweisen, der mit Hilfe der elektrischen Maschine (EM) schaltbar ist, wobei das Gruppengetriebe (6) eine zwischen der zumindest einen Vorschaltgruppe (8) und dem zumindest einen Hauptgetriebe (10) geschaltete Kupplung (20) zur Verbindung einer Getriebeeingangswelle (18) mit der Getriebehauptwelle (22) zur Bildung des mindestens einen Direktgangs (G6*, G12*) aufweist, wobei während der Existenz des Direktgangs (G6*, G12*) Verbindungen der Getriebeeingangswelle (18) und der Getriebehauptwelle (22) zu der oder jeder Vorgelegewelle (14, 16), sowie zur elektrischen Maschine (EM) getrennt sind..

## Beschreibung

Die vorliegende Erfindung betrifft einen Antriebsstrang mit einem Hybridantrieb und einem automatisierten Gruppengetriebe und ein Verfahren zum Betreiben des Antriebsstrangs gemäß dem Oberbegriff der Ansprüche 1 und 6.

Es ist bekannt, dass gerade im Nutzfahrzeugbereich automatisierte Gruppengetriebe zum Einsatz kommen, die zumeist aus einem Hauptgetriebe mit einer Vorschaltgruppe und/oder einer Nachschaltgruppe bestehen. Als Vorschaltgruppe wird bevorzugt eine Splitgruppe verwendet, die die Ganganzahl des Hauptgetriebes verdoppelt. Als Nachschaltgruppe wird bevorzugt eine Bereichsgruppe eingesetzt, die eine größere Getriebespreizung schafft und so z.B. bei einer zweistufigen Bereichsgruppe in Form eines Planetengetriebes die Ganganzahl nochmals verdoppeln kann. Seit einiger Zeit wird dabei versucht die Gänge in den einzelnen Getriebeteilen und auch getriebeteilübergreifend mit einer möglichst geringen Zugkraftunterbrechung schaltbar zu machen oder wenn möglich die Gänge zugkraftunterbrechungsfrei zu schalten.

Automatisierte Gruppengetriebe können auch in Verbindung mit Hybridantriebstechnik verwendet werden. Auch hierbei wird ein möglichst zugkraftunterbrechungsfreies Schalten der Gänge bevorzugt. Zum Beispiel aus der Schrift DE 10 2009 054 752 A1 der Anmelderin ist eine solche Kombination bekannt. In einem Antriebsstrang eines Kraftfahrzeugs mit einem Hybridantrieb, einem Verbrennungsmotor und einer elektrischen Maschine, und einem automatisierten Gruppengetriebe, steht die elektrische Maschine des Hybridantriebs mit der oder jeder Vorgelegewelle in Verbindung. Damit kann bei einer Schaltung in der Splitgruppe des Gruppengetriebes eine Zugkraftunterstützung bereitgestellt werden. Es sind allerdings nur Lastschaltungen (Stützgangschaltungen) bei Schaltungen der Splitgruppe möglich. Soll die Koppelung bzw. Abkoppelung der Elektromaschine und der Vorgelegewellen schaltbar sein, wird dies durch ein zusätzliches Schaltelement, welches nicht für die Funktion des mechanischen Radsatzes notwendig ist, ermöglicht.

Um den Kraftstoffverbrauch zu minimieren, werden Antriebsstränge für Kraftfahrzeuge häufig so ausgelegt, dass die Hauptfahranteile im direkten Getriebegang gefahren werden. Im direkten Getriebegang erfolgt der Kraftfluss durch eine direkte Koppelung der Antriebswelle mit der Abtriebswelle, was in einer Erhöhung des Wirkungsgrads resultiert. Aus der Schrift DE 102 39 396 A1 der Anmelderin ist ein Getriebe bekannt, bei dem bei geschaltetem Direktgang die Teile des Getriebes, die im direkten Gang nicht am Kraftfluss beteiligt sind, ganz oder teilweise abgekoppelt werden. Damit können Reibungsverluste dieser Getriebeteile verhindert werden und der Wirkungsgrad des Getriebes verbessert werden. Allerdings sind hier keine Lastschaltungen möglich.

Der vorliegenden Erfindung liegt die Aufgabe zugrunde, einen Antriebsstrang sowie ein Verfahren zum Betreiben des Antriebsstrangs mit einem Hybridantrieb und einem automatisierten Gruppengetriebe zu schaffen, wobei das Gruppengetriebe weitgehend zugkraftunterstützt geschaltet wird und der Wirkungsgrad des Gruppengetriebes sowie der Verbrauch verbessert wird.

Die Aufgabenstellung wird durch einen Antriebsstrang gemäß dem Anspruch 1 und ein Verfahren gemäß dem Anspruch 6 der vorliegenden Erfindung gelöst. Weitere Ausgestaltungen und Vorteile gehen aus den jeweiligen Unteransprüchen hervor.

Demnach wird ein Antriebsstrang eines Kraftfahrzeugs vorgeschlagen, mit einem einen Verbrennungsmotor und eine elektrische Maschine aufweisenden Hybridantrieb und einem zwischen den Hybridantrieb und einen Achsantrieb geschalteten, automatisierten Gruppengetriebe, wobei das automatisierte Gruppengetriebe zumindest ein in Vorgelegebauweise ausgeführtes Hauptgetriebe mit einer Hauptwelle und mindestens einer Vorgelegewelle, eine dem Hauptgetriebe antriebstechnisch vorgeschaltete, insbesondere als Splitgruppe ausgeführte, Vorschaltgruppe und/oder eine dem Hauptgetriebe antriebstechnisch nachgeschaltete, insbesondere als Bereichsgruppe ausgeführte, Nachschaltgruppe aufweist, wobei die elektrische Maschine des Hybridantriebs mit der oder jeder Vorgelegewelle in Verbindung steht, indem die elektrische Maschine eine mechanische Verbindung mit einer ersten Radebene aufweist. Erfindungsgemäß weisen die Vorschaltgruppe und das Hauptgetriebe mindestens einen gemeinsamen, schaltbaren Direktgang durch die beiden Getriebeteile Vorschaltgruppe und Hauptgetriebe auf. Mit diesem Direktgang können je nach Nachschaltgruppe verschiedene Zwischengänge bzw. Stützgänge geschaltet werden. In einer zweistufigen Bereichsgruppe sind zwei Stützgänge möglich. Damit sind die Schaltvorgänge der Vorschaltgruppe und des Hauptgetriebes zugkraftunterstützt herstellbar.

Solange die Bereichsgruppe nicht wechselt, kann damit zugkraftunterstützt von jedem beliebigen Gang in einen Direktgang geschaltet werden. Ebenso kann solange die Bereichsgruppe nicht wechselt zugkraftunterstützt von jedem Direktgang in verschiedene Gänge geschaltet werden. In einer bevorzugten Ausführungsform weisen die Direktgänge dieselbe Übersetzung auf, wie die höchsten schaltbaren Gänge der Vorschaltgruppe und des Hauptgetriebes in den verschiedenen Schaltzuständen der Bereichsgruppe.

Der Direktgang mit verbundener Eingangswelle und Getriebehauptwelle wird durch eine Kupplung hergestellt, die ebenfalls zur Umgehung der Vorschaltgruppe verwendet wird und Teil des Gruppengetriebes ist. Durch die Herstellung eines Direktgangs wird die elektrische Maschine abgekoppelt und es sind keine zusätzlichen Schaltelemente notwendig. Die Kupplung wird vorzugsweise zwischen der Vorschaltgruppe und dem Hauptgetriebe platziert und kann z.B. in Form einer Klauenkupplung ausgeführt sein. Während eines Direktgangs können mit dem vorgestellten Aufbau die Vorgelegewellen und weitere nicht direkt am Kraftfluss beteiligte Bauteile des Hauptgetriebes und der Vorschaltgruppe abgekoppelt werden, was den Wirkungsgrad und den Verbrauch verbessert.

Ist eine Abkopplung der Elektromaschine in allen Gängen gewünscht, kann optional zwischen der elektrischen Maschine und der ersten Radebene eine zusätzliche Kupplung eingefügt werden.

Es wird außerdem ein Verfahren zum Betreiben eines erfindungsgemäßen Antriebsstrangs vorgeschlagen, wobei bei Ausführung einer Schaltung in der Vorschaltgruppe und/oder in der Hauptgruppe über die elektrische Maschine des Hybridantriebs eine Zugkraftunterstützung bereitgestellt wird, wozu zwischen einem Ursprungsgang und einem Zielgang ein Direktgang in der Vorschaltgruppe und dem Hauptgetriebe als Zwischengang geschaltet wird, und in der dem Hauptgetriebe antriebstechnisch nachgeschalteten, insbesondere als Bereichsgruppe ausgeführten, Nachschaltgruppe keine Schaltung ausgeführt wird.

Während eines geschalteten Direktgangs können durch generatorischen Betrieb der elektrischen Maschine die Vorgelegewellen aktiv gebremst werden und die Energie zur Rekuperation verwendet werden.

Zur Verdeutlichung der Erfindung sind der Beschreibung Figuren beigefügt, die nachfolgend genauer erläutert werden.
Fig. 1: erfindungsgemäßer Antriebsstrang
Fig. 2: tabellarisch aufgeführte Schaltlogik zu Fig. 1
Fig. 3: tabellarisch aufgeführte Schaltmatrix zu Fig. 1

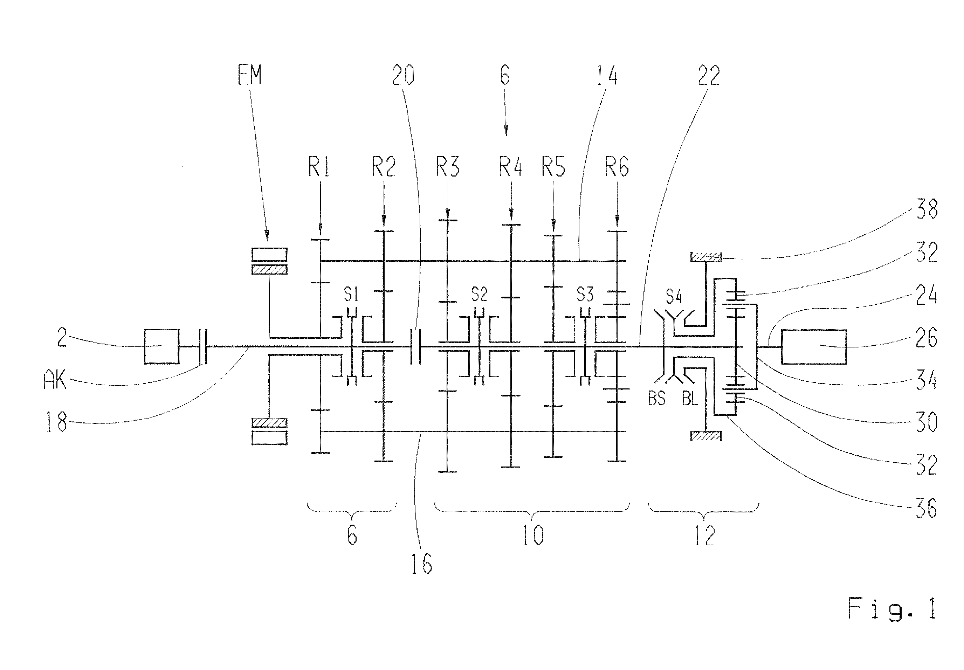

In Fig. 1 ist ein erfindungsgemäßer Antriebsstrang dargestellt. Angetrieben wird der Antriebsstrang von einem Hybridantrieb, der aus einem Verbrennungsmotor 2 und der elektrischen Maschine EM besteht. Im weiteren ist ein Gruppengetriebe 6 verbaut, welches aus drei Getriebegruppen besteht, der Vorschaltgruppe in Form einer Splitgruppe 8, dem Hauptgetriebe 10 und einer zweistufigen Bereichsgruppe in Form eines Planetengetriebes 12. Das Gruppengetriebe 6 ist in Vorgelegewellenbauweise ausgeführt und besitzt zwei achsparallel verlaufende Vorgelegewellen 14, 16. Außerdem ist das Gruppengetriebe 6 über eine Getriebeeingangswelle 18 mit dem Verbrennungsmotor 2 verbunden bzw. über die Anfahrkupplung AK verbindbar. Die Getriebeeingangswelle 18 verläuft durch die Splitgruppe 8 und ist durch eine Kupplung 20 mit der Getriebehauptwelle 22 im Hauptgetriebe verbindbar. Die Kupplung 20 verbindet lediglich die Getriebeeingangswelle 18 mit der Getriebehauptwelle 22 und steht nicht in Kontakt mit weiteren Radebenen. Dies bedeutet, dass keine weiteren Schaltvorgänge durch die Kupplung 20 durchgeführt werden können. Die Getriebehauptwelle 22 verbindet das Hauptgetriebe mit der Bereichsgruppe, in der die Getriebehauptwelle 22 mit dem Sonnenrad 30 des Plantengetriebes 12 drehfest verbunden ist. Das Sonnenrad 30 greift in Planetenräder 32, welche über den Planetenträger 34 mit einer Abtriebswelle 24 verbunden sind. Das Planetengetriebe 12 kann mit dem zugehörigen Planetengetriebeschaltelement S4 in zwei Übersetzungsstufen geschaltet werden, Schnell BS oder Langsam BL. In der schnellen Übersetzungsstufe BS wird durch das Planetengetriebeschaltelement S4 das Hohlrad 36 des Planetenradsatzes mit der Getriebeeingangswelle 22 verbunden. In der langsamen Übersetzungsstufe BL wird durch das Planetengetriebeschaltelement S4 das Hohlrad 36 des Planetenradsatzes mit dem Getriebegehäuse 38 verbunden. Die Abtriebswelle 24 verbindet das Gruppengetriebe 6 mit einem Achsantrieb 26. Die elektrische Maschine EM ist primärseitig am Gruppengetriebe 6 positioniert und mechanisch mit einer ersten Splitgruppenradebene R1 verbunden. Die Splitgruppe 8 besitzt zwei Splitgruppenradebenen R1, R2 und das Hauptgetriebe 10 besitzt vier Hauptgetrieberadebenen R3, R4, R5, R6. Die vierte Hauptgetrieberadebene R6 bildet dabei die Rückwärtsgangradebene. Jede Radebene R1, R2, R3, R4, R5, R6 besitz ein auf der Getriebeeingangswelle 18 bzw. auf der Getriebehauptwelle 22 liegendes Zahnrad, welches als Losrad ausgeführt ist, und welches jeweils mit einem Zahnrad auf jeder Vorgelegewelle 14, 16 in Verbindung steht. Im Weiteren ist in der Splitgruppe 8 ein Splitgruppenschaltelement S1 verbaut, mit dem eine Verbindung der Getriebeeingangswelle 18 mit der ersten Splitgruppenradebene R1 oder der zweiten Splitgruppenradebene R2 geschaffen werden kann. Mit der Kupplung 20, die zwischen der Splitgruppe 8 und dem Hauptgetriebe 10 liegt, kann die Getriebeeingangswelle 18 mit der Getriebehauptwelle 22 verbunden werden. Das Hauptgetriebe 10 besitzt zwei Hauptgetriebeschaltelemente S2, S3. Das erste Hauptgetriebeschaltelement S2 kann zusammen mit der Splitgruppe 8 über die erste Hauptgetrieberadebene R3 den fünften Gang G5 und den sechsten Gang G6 und über die zweite Hauptgetrieberadebene R4 den dritten Gang G3 und den vierten Gang G4 verwirklichen. Das zweite Hauptgetriebeschaltelement S3 kann zusammen mit der Splitgruppe 8 über die dritte Hauptgetrieberadebene R5 den ersten Gang G1 und den zweiten Gang G2 sowie über die vierte Hauptgetrieberadebene R6 zwei Rückwärtsgänge GR1, GR2 verwirklichen. Mit dem Hauptgetriebe 10 sind damit drei Vorwärtsgänge und ein Rückwärtsgang schaltbar. Durch die Splitgruppe 8 werden diese verdoppelt und es sind sechs Vorwärtsgänge und zwei Rückwärtsgänge schaltbar. Zusätzlich kann durch die Verbindung der Getriebeeingangswelle 18 mit der Getriebehauptwelle 22 ein weiterer Vorwärtsgang in Form eines Direktgangs geschaltet werden. Durch das zweistufige Planetengetriebe 12 kann die Ganganzahl nochmals verdoppelt werden und es können zwölf Vorwärtsgänge G1 - G12 und vier Rückwärtsgänge GR1-GR4 sowie zwei Direktgänge G6*, G12* geschaltet werden.

Durch die Ausführung aller Zahnräder des Hauptgetriebes 10 auf der Getriebehauptwelle 22 und der Splitgruppe 8 auf der Getriebeeingangswelle 18 als Losräder, können die Vorgelegewellen 14, 16 während eines geschalteten Direktgangs G6*, G12* abgekoppelt werden. Dadurch werden Verluste im Gruppengetriebe 6 reduziert (z.B. Wegfall von Lagerverlusten) und gleichzeitig ist eine Abkopplung der Nulllastverluste der elektrischen Maschine EM möglich.

Die Direktgänge G6*, G12* werden erfindungsgemäß so ausgeführt, dass sie als Stützgang verwendet werden können und haben in diesem Beispiel dieselben Übersetzungen wie der sechste Gang G6 und der zwölfte Gang G12. Durch die Verbindung der elektrischen Maschine EM mit den Vorgelegewellen 14, 16 über die erste Splitgruppenradebene R1 kann aus dem ersten bis sechsten Gang G1, G2, G3, G4, G5, G6 immer ohne Zugkraftunterbrechung in den Direktgang G6* gewechselt werden und aus dem siebten bis zwölften Gang G7, G8, G9, G10, G11, G12 in den Direktgang G12* gewechselt werden. Ebenso gilt dies in umgekehrter Richtung. Dadurch kann durch Abfolge der Gänge vom Ist-Gang über den Zwischengang, ohne Wechsel der Bereichsgruppe 12, in den Zielgang gewechselt werden, ohne eine komplette Unterbrechung der Zugkraft zu erhalten. Die minimalen und maximalen Drehzahlrandbedingungen des Antriebsstrangs müssen dafür abgestimmt werden. Somit ist eine zugkraftunterstützte Schaltung in der Splitgruppe 8 und im Hauptgetriebe 10 ermöglicht. Einzig die Bereichsgruppenumschaltung findet mit Zugkraftunterbrechung statt.

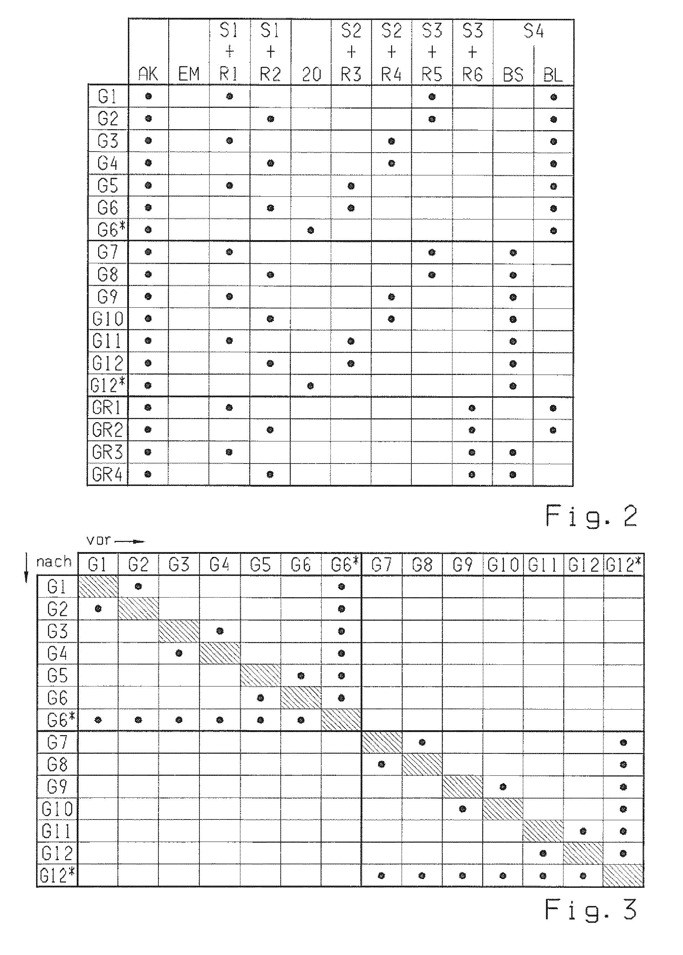

Wie ein entsprechendes Verfahren zur zugkraftunterstützten Schaltung in einem erfindungsgemäßen Antriebsstrang nach Fig. 1 ablaufen kann, wird in Fig. 2 aufgezeigt. Dabei wird in einer Tabelle aufgezeigt, welche Kupplung, Schaltzustände bzw. welche Bereichsgruppenschaltung aktiv ist, um einen Gang zu schalten. Ein Punkt im jeweiligen Feld bedeutet, dass der Schaltzustand aktiv ist. Wie bereits beschrieben findet eine Zugkraftunterstützung in der Splitgruppe 8 und im Hauptgetriebe 10 statt. Zuerst soll nun ein Beispiel für eine zugkraftunterstützte Schaltung im Splitgetriebe 8 aufgeführt werden. Dazu wird beispielhaft vom zwölften Gang G12 in den elften Gang G11 geschaltet. In der Ausgangsstellung befinden sich die Schaltelemente S1, S2, S4 in den Positionen für den zwölften Gang G12. Das zweite Hauptgetriebeschaltelement S3 ist nicht betätigt und befindet sich in Neutralstellung. Der Verbrennungsmotor 2 ist über eine geschlossene Anfahrkupplung AK mit der Getriebeeingangswelle 18 verbunden und das Drehmoment wird über das Splitgruppenschaltelement S1 und die zweite Splitgruppenradebene R2 auf die Vorgelegewellen 14, 16 geleitet von wo aus die erste Hauptgetrieberadebene R3 das Drehmoment über das erste Hauptgetriebeschaltelement S2 auf die Getriebehauptwelle 22 leitet. Das Planetengetriebe 12 ist dabei auf Schnell BS geschaltet. Nun beginnt die Schaltung vom zwölften Gang G12 in den elften Gang G11. Die elektrische Maschine EM gibt Leistung an die Vorgelegewellen 14, 16 ab. Entsprechend reduziert sich das vom Verbrennungsmotor 2 abgegebene Moment. Die Leistung der elektrischen Maschine EM wird über die Vorgelegewellen 14, 16, die erste Hauptgetrieberadebene R3 und das erste Hauptgetriebeschaltelement S2 auf die Getriebehauptwelle 22 und durch das Planetengetriebe 12 an die Abtriebswelle 24 geführt. Durch Rücknahme des Moments des Verbrennungsmotors 2 kann das Splitgruppenschaltelement S1 von der zweiten Splitgruppenradebene R2 entkoppelt werden und durch Drehzahlführung mittels des Verbrennungsmotors 2 und Position der Anfahrkupplung AK gelangt das Splitgruppenschaltelement S1 auf Zieldrehzahl zur Kopplung mit der ersten Splitgruppenradebene R1. Wenn die Zieldrehzahl erreicht ist, wird das Splitgruppenschaltelement S1 mit der ersten Splitgruppenradebene R1 gekoppelt und die Anfahrkupplung AK geöffnet. Zur Lastübernahme des elften Ganges G11 schließt die Anfahrkupplung AK und die elektrische Maschine EM reduziert die Abgabeleistung entsprechend. Der elfte Gang G11 ist eingelegt, die Anfahrkupplung AK geschlossen und die elektrische Maschine EM dreht passiv mit. Alle Schaltvorgänge der Splitgruppe 8 sind in gleicher Weise zugkraftunterstützt ausführbar.

Mit dem erfindungsgemäßen Antriebsstrang kann ebenfalls zugkraftunterstützt im Hauptgetriebe 10 geschaltet werden. Beispielhaft wird aufgezeigt, wie bei einer zugkraftunterstützten Schaltung ausgehend vom zehnten Gang G10 in den Direktgang in der schnellen Bereichsgruppe G12* verfahren wird. Die Anfahrkupplung AK ist geschlossen und der zehnte Gang G10 ist eingelegt. Die elektrische Maschine EM dreht passiv mit. Nun beginnt die Schaltung vom zehnten Gang G10 in den Direktgang in der schnellen Bereichsgruppe G12*. Die elektrische Maschine EM baut motorische Leistung auf und der Verbrennungsmotor 2 nimmt sein Abgabemoment in Richtung Null zurück, damit das Splitgruppenschaltelement S1 und die zweite Splitgruppenradebene R2 entkoppelt werden können und das Splitgruppenschaltelement S1 in die Neutralposition geschaltet werden kann. Das Fahrzeug fährt nun rein elektrisch über die elektrische Maschine EM. Die Kopplung zur Getriebehauptwelle 22 und darüber zur Abtriebswelle 24 erfolgt über die Vorgelegewellen 14, 16, die zweite Hauptgetrieberadebene R4 und das erste Hauptgetriebeschaltelement S2 des bisherigen zehnten Gangs G10 im Hauptgetriebe 10. Der Verbrennungsmotor 2 erhöht nun seine Drehzahl und führt die Getriebeeingangswelle 18 auf Zieldrehzahl, sodass die Kupplung 20 geschlossen werden kann. Der Verbrennungsmotor 2 übernimmt damit den Vortrieb durch seine Leistungsabgabe und die elektrische Maschine EM nimmt entsprechend ihre Leistung zurück, sodass keine Leistungsschwankungen auftreten. Durch Momentennulldurchgang zwischen der zweiten Hauptgetrieberadebene R4 und dem ersten Hauptgetriebeschaltelement S2 kann das erste Hauptgetriebeschaltelement S2 in Neutralstellung geschaltet werden. Die Vorgelegewellen 14, 16 mit der elektrischen Maschine EM sind nun abgekoppelt und laufen langsam aus. Die Vorgelegewellen 14, 16 können auch durch generatorischen Betrieb der elektrischen Maschine EM (Rekuperation) aktiv gebremst werden. Der Direktgang 12* ist nun eingelegt. Der Direktgang in der schnellen Bereichsgruppe G12* kann analog zu diesem Schaltvorgang zugkraftunterstützt aus allen Gängen G7, G8, G9, G10, G11, G12 der schnellen Bereichsgruppe BS erfolgen. Eine Schaltung aus einem Gang G1, G2, G3, G4, G5, G6 der auf Langsam geschalteter Bereichsgruppe BL in den Direktgang in der langsamen Bereichsgruppe G6* erfolgt analog. Auf Drehzahlrandbedingungen muss geachtet werden.

Das Verfahren zur zugkraftunterstützten Schaltung kann ebenfalls aus einem Direktgang G6*, G12* erfolgen. Beispielhaft soll nun vom Direktgang in der schnellen Bereichsgruppe G12* in den elften Gang G11 geschaltet werden. Der Direktgang in der schnellen Bereichsgruppe G12* ist eingelegt. Die elektrische Maschine EM sowie die Vorgelegewellen 14, 16 stehen still. Der Verbrennungsmotor 2 versorgt den Antriebsstrang mit Leistung. Die Anfahrkupplung AK ist geschlossen. Das Splitgruppenschaltelement S1 befindet sich in Neutralposition. Die elektrische Maschine EM beschleunigt die Vorgelegewellen 14, 16 auf Zieldrehzahl, sodass das erste Hauptgetriebeschaltelement S2 geschaltet werden kann. Ist die Zieldrehzahl erreicht wird das erste Hauptgetriebeschaltelement S2 mit der ersten Hauptgetrieberadebene R3 verbunden. Nach der Verbindung des ersten Hauptgetriebeschaltelements S2 übernimmt die elektrische Maschine EM die Leistungsanforderung des Verbrennungsmotors 2. Durch den Momentennulldurchgang des Verbrennungsmotors 2 kann nun die Kupplung 20 getrennt werden. Ist die Kupplung 20 offen, wird durch den Verbrennungsmotor 2 die Getriebeeingangswelle 18 auf Zieldrehzahl beschleunigt und das Splitgruppenschaltelement S1 kann mit der ersten Splitgruppenradebene R1 gekoppelt werden. Ist das Splitgruppenschaltelement S1 mit der ersten Splitgruppenradebene R1 gekoppelt, übernimmt der Verbrennungsmotor 2 die Leistungsversorgung des Antriebstrangs. Die Leistung der elektrischen Maschine EM wird entsprechend reduziert, sodass keine Leistungsspitzen/Stöße entstehen. Anschließend übernimmt der Verbrennungsmotor 2 die vollständige Leistungsversorgung und die elektrische Maschine EM läuft passiv mit.

In Fig. 3 wird die Zugkraftunterstützung für die einzelnen Gänge nochmals in einer Schaltmatrix verdeutlicht. Waagerecht sind die Ursprungsgänge aufgezeigt, die mit einem Antriebsstrang gemäß Fig. 1 geschaltet werden können. Senkrecht sind die Zielgänge aufgeführt, die mit einem Antriebsstrang gemäß Fig. 1 geschaltet werden können. Die Tabelle in Fig. 3 zeigt nun durch einen Punkt in einem Tabellenfeld auf von welchem Ursprungsgang man zugkraftunterstützt in welchen Zielgang schalten kann. Dies ist wie bereits beschrieben innerhalb der jeweiligen Splitgruppenschaltungen möglich. In der Bereichsgruppe in Schaltstellung Langsam BL ist eine zugkraftunterstützte Schaltung der Splitgruppe möglich vom ersten Gang G1 in den zweiten Gang G2 und umgekehrt, vom dritten Gang G3 in den vierten Gang G4 und umgekehrt und vom fünften Gang G5 in den sechsten Gang G6 und umgekehrt. In der Bereichsgruppe in Schaltstellung Schnell BS ist eine zugkraftunterstützte Schaltung der Splitgruppe möglich vom siebten Gang G7 in den achten Gang G8 und umgekehrt, vom neunten Gang G9 in den zehnten Gang G10 und umgekehrt und vom elften Gang G11 in den zwölften Gang G12 und umgekehrt. Außerdem sind über die Zwischenschaltung eines Stützganges G6*, G12* zugkraftunterstützte Schaltungen im Hauptgetriebe möglich. In der Bereichsgruppe in Schaltstellung Langsam BL ist aus dem ersten bis sechsten Gang G1, G2, G3, G4, G5, G6 eine zugkraftunterstützte Schaltung in den Stützgang G6* möglich und umgekehrt. In der Bereichsgruppe in Schaltstellung Schnell BS ist aus dem siebten bis zwölften Gang G7, G8, G9, G10, G11, G12 eine zugkraftunterstützte Schaltung in den Stützgang G12* möglich und umgekehrt.

### Bezugszeichen

- 2: Verbrennungsmotor
- EM: elektrische Maschine
- 6: Gruppengetriebe
- 8: Splitgruppe
- 10: Hauptgetriebe
- 12: Planetengetriebe
- 14: Vorgelegewelle
- 16: Vorgelegewelle
- 18: Getriebeeingangswelle
- 20: Kupplung
- 22: Getriebehauptwelle
- 24: Abtriebswelle
- 26: Achsantrieb
- AK: Anfahrkupplung
- 30: Sonnenrad
- 32: Planetenräder
- 34: Planetenträger
- 36: Hohlwelle
- 38: Getriebegehäuse
- R1: erste Splitgruppenradebene
- R2: zweite Splitgruppenradebene
- R3: erste Hauptgetrieberadebene
- R4: zweite Hauptgetrieberadebene
- R5: dritte Hauptgetrieberadebene
- R6: vierte Hauptgetrieberadebene / Rückwärtsgangradebene
- S1: Splitgruppenschaltelement
- S2: erstes Hauptgetriebeschaltelement
- S3: zweites Hauptgetriebeschaltelement
- S4: Planetengetriebeschaltelement
- G1, G2, G3, G4, G5, G6: Gang eins bis sechs des Gruppengetriebes bei auf Langsam geschalteter Bereichsgruppe
- G7, G8, G9, G10, G11, G12: Gang sieben bis zwölf des Gruppengetriebes bei auf Schnell geschalteter Bereichsgruppe
- G6*: Direktgang in der langsamen Bereichsgruppe / Stützgang
- G12*: Direktgang in der schnellen Bereichsgruppe / Stützgang
- GR1, GR2: erster und zweiter Rückwärtsgang bei auf Langsam geschalteter Bereichsgruppe
- GR3, GR4: dritter und vierter Rückwärtsgang bei auf Schnell geschalteter Bereichsgruppe
- BS: Bereichsgruppe in Schaltstellung Schnell
- BL: Bereichsgruppe in Schaltstellung Langsam

## Patentansprüche

1. Antriebsstrang eines Kraftfahrzeugs, mit einem einen Verbrennungsmotor (2) und eine elektrische Maschine (EM) aufweisenden Hybridantrieb und einem zwischen den Hybridantrieb und einen Achsantrieb (26) geschalteten, automatisierten Gruppengetriebe (6), wobei das automatisierte Gruppengetriebe (6) zumindest ein in Vorgelegebauweise ausgeführtes Hauptgetriebe (10) mit einer Getriebehauptwelle (22) und mindestens einer Vorgelegewelle (14, 16) sowie zumindest eine dem Hauptgetriebe (10) antriebstechnisch vorgeschaltete, insbesondere als Splitgruppe (8) ausgeführte Vorschaltgruppe aufweist, wobei die elektrische Maschine (EM) des Hybridantriebs mit der oder jeder Vorgelegewelle (14, 16) in Verbindung steht, **dadurch gekennzeichnet, dass** die Vorschaltgruppe (8) und das Hauptgetriebe (10) mindestens einen gemeinsamen, schaltbaren Direktgang (G6*, G12*) durch diese beiden Getriebeteile zur zugkraftunterstützten Schaltung des Hauptgetriebes (10) aufweisen, der mit Hilfe der elektrischen Maschine (EM) schaltbar ist, wobei das Gruppengetriebe (6) eine zwischen der zumindest einen Vorschaltgruppe (8) und dem zumindest einen Hauptgetriebe (10) geschaltete Kupplung (20) zur Verbindung einer Getriebeeingangswelle (18) mit der Getriebehauptwelle (22) zur Bildung des mindestens einen Direktgangs (G6*, G12*) aufweist, wobei während der Existenz des Direktgangs (G6*, G12*) Verbindungen der Getriebeeingangswelle (18) und der Getriebehauptwelle (22) zu der oder jeder Vorgelegewelle (14, 16), sowie zur elektrischen Maschine (EM) getrennt sind.

2. Antriebsstrang eines Kraftfahrzeugs nach Anspruch 1, **dadurch gekennzeichnet, dass** der Antriebsstrang genau zwei achsparallel zur Getriebehauptwelle (22) angeordnete Vorgelegewellen (14, 16) aufweist.

3. Antriebsstrang eines Kraftfahrzeugs nach einem der vorangehenden Ansprüche, **dadurch gekennzeichnet, dass** die Direktgänge (G6*, G12*) dieselbe Übersetzung aufweisen, wie die höchsten schaltbaren Gänge (G6, G12) der zumindest einen Vorschaltgruppe (8) und des zumindest einen Hauptgetriebes (10).

4. Verfahren zum Betreiben eines Antriebsstrangs nach einem der Ansprüche 1 bis 3, wobei bei Ausführung einer Schaltung in der zumindest einen Vorschaltgruppe (8) über die elektrische Maschine (EM) des Hybridantriebs eine Zugkraftunterstützung bereitgestellt wird, und wobei bei Ausführung einer Schaltung im zumindest einen Hauptgetriebe (10) ebenfalls eine Zugkraftunterstützung bereitgestellt wird, **dadurch gekennzeichnet, dass** zwischen einem Ursprungsgang und einem Zielgang ein Direktgang (G6*, G12*) in der zumindest einen Vorschaltgruppe (8) und dem zumindest einen Hauptgetriebe (10) als Stützgang geschaltet wird, wobei die elektrische Maschine (EM) motorische Leistung aufbaut und über die mindestens eine Vorgelegewelle (14, 16) den Vortrieb übernimmt und der Verbrennungsmotor (2) von der Getriebehauptwelle (22) abgekoppelt werden kann, so dass er im von der Getriebehauptwelle (22) abgekoppelten Zustand die Drehzahl einer Getriebeeingangswelle (18) auf eine Zieldrehzahl anpassen kann.

5. Verfahren zum Betreiben eines Antriebsstrangs nach Anspruch 5, **dadurch gekennzeichnet, dass** bei einem Schaltvorgang mit der Kupplung (20), bei dem der Verbrennungsmotor (2) über die Getriebeeingangswelle (18) mit der Getriebehauptwelle (22) verbunden wird, die elektrische Maschine (EM) ihre Leistung soweit zurück nimmt, dass keine Leistungsschwankungen auftreten.

6. Verfahren zum Betreiben eines Antriebsstrangs nach Anspruch 4 oder 5, **dadurch gekennzeichnet, dass** nicht am Kraftfluss beteiligte Getriebeteile sowie die elektrische Maschine (EM) durch Schaltung des Direktgangs (G6*, G12*) abgekoppelt werden.

7. Verfahren zum Betreiben eines Antriebsstrangs nach Anspruch 4, 5 oder 6, **dadurch gekennzeichnet, dass** zugkraftunterstützt von jedem beliebigen Gang (G1, G2, G3, G4, G5, G6, G7, G8, G9, G10, G11, G12) in einen Direktgang (G6*, G12*) geschaltet werden kann, solange eine Bereichsgruppe (12) nicht wechselt.

8. Verfahren zum Betreiben eines Antriebsstrangs nach Anspruch 4, 5, 6 oder 7, **dadurch gekennzeichnet, dass** zugkraftunterstützt von jedem Direktgang (G6*, G12*) in jeden beliebigen Gang (G1, G2, G3, G4, G5, G6, G7, G8, G9, G10, G11, G12) geschaltet werden kann, solange eine Bereichsgruppe (12) nicht wechselt.

9. Verfahren zum Betreiben eines Antriebsstrangs nach einem der vorangehenden Ansprüche, **dadurch gekennzeichnet, dass** die mindestens eine Vorgelegewelle (14, 16) während eines Direktgangs (G6*, G12*) durch generatorischen Betrieb der elektrischen Maschine (EM) aktiv gebremst werden und die Energie zur Rekuperation verwendet wird.
